# FASCICULE DE BREVET EUROPEEN

(11) **EP 3 864 335 B1**
(45) Date de publication et mention de la délivrance du brevet: **03.04.2024**
(21) Numéro de dépôt: 19794612.2
(22) Date de dépôt: 24.09.2019
(51) Int. Cl.: F17C 5/02

(54) **PROCÉDÉ ET INSTALLATION DE STOCKAGE ET DE DISTRIBUTION D'HYDROGÈNE LIQUÉFIÉ**
VERFAHREN UND ANLAGE ZUR SPEICHERUNG UND VERTEILUNG VON VERFLÜSSIGTEM WASSERSTOFF
METHOD AND FACILITY FOR STORING AND DISTRIBUTING LIQUEFIED HYDROGEN

(30) Priorité: 09.10.2018 FR 1859328
(43) Date de publication de la demande: 18.08.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ALLIDIERES, Laurent, 75007 Paris (FR); DE SOUZA SILVA, Renan Luis, 75007 Paris (FR)
(74) Mandataire: Air Liquide
(86) Numéro de dépôt international: PCT/FR2019/052232
(87) Numéro de publication internationale: WO 2020/074801

(56) Documents cités:
- DE-A1-102010 047 300
- FR-A1- 3 017 183
- FR-A1- 3 017 184
- GB-A- 2 515 091
- US-A1- 2017 268 463

## Description

L'invention concerne un procédé et installation de stockage et de distribution d'hydrogène liquéfié. Un tel procédé est connu de DE102010047300A1.

L'invention concerne plus particulièrement un procédé de remplissage d'un réservoir d'hydrogène liquide, par exemple un réservoir mobile d'une semi-remorque, le procédé comprenant une première étape de transfert d'une première quantité d'hydrogène liquide dans le réservoir à partir d'une première source d'hydrogène liquide comprenant un liquéfacteur d'hydrogène, la première quantité d'hydrogène liquide étant prévue pour abaisser la température et la pression dans le réservoir.

Du fait de sa densité notamment, l'hydrogène liquide est privilégié par rapport à l'hydrogène gazeux lorsque de grandes quantités de produit doivent être transportées sur de grandes distances.

Un autre avantage de l'hydrogène liquide est lié à sa densité et la grande capacité de stockage dans une station-service d'hydrogène pour véhicule pile à combustible. Une température de 20K élimine de facto toutes les impuretés (solides à cette température) du gaz, ce qui optimise le fonctionnement des piles à combustible.

En revanche, du fait de la faible densité de l'hydrogène liquide (70g/litre) comparativement à l'eau, la pression disponible par hauteur hydrostatique est faible, ce qui rend le pompage difficile, et la basse température peut engendrer des pertes par évaporation assez importantes lors des transferts de liquide.

En effet, les systèmes de chargement de camions et les réservoirs dans les usines de liquéfaction de l'hydrogène peuvent engendrer des pertes pouvant aller jusqu'à 15 de la production (par exemple 0.2% de perte du réservoir, 5% de perte du au « flash » dans la vanne de remplissage du réservoir et 10% de perte dans le camion).

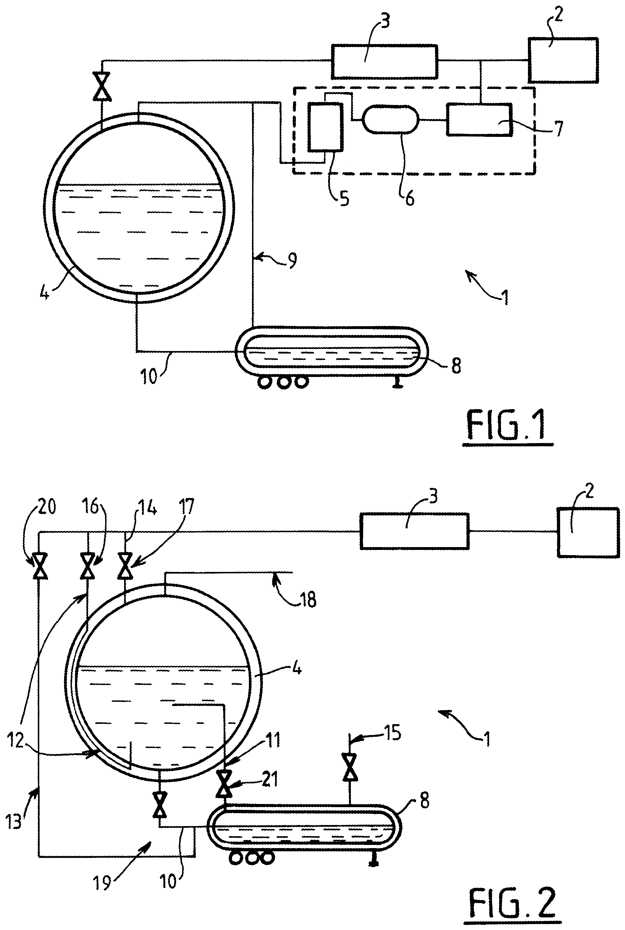

Ces pertes par évaporation peuvent bien sûr être récupérées, réchauffées, comprimées après stockage et réinjectées dans le liquéfacteur. Ceci est schématisé à la figure 1 qui représente une installation comprenant un stockage 4 de stockage de liquide produit. L'hydrogène est produit à partir d'une source 2 d'hydrogène gazeux qui est liquéfié dans un liquéfacteur 3 avant son transfert dans le stockage 4. Le gaz de de vaporisation (boil-off) peut être prélevé dans une unité comprenant par exemple, en série, un réchauffeur 5, un réservoir 6 tampon (par exemple isobare), un organe 7 de compression. Le gaz récupéré et comprimé peut être admis à l'entrée du liquéfacteur 3 en vue de sa reliquéfaction et réintroduction dans le stockage 4.

Par exemple, l'hydrogène liquide produit par le liquéfacteur 3 alimente le stockage 4 (par exemple dimensionné pour une autonomie de plusieurs jours de consommation afin de palier à une panne du liquéfacteur) à une pression comprise par exemple entre 1,05 et 5 bar abs.

Classiquement, l'hydrogène liquide produit est à sa température de bulle à la pression du stockage du fait de la conception classique des unités de liquéfaction de l'hydrogène, à cycle Claude à Hydrogène, où la liquéfaction est réalisée à travers une vanne à effet Joule Thompson.

Le réservoir 8 arrive à la station de chargement avec un petit pourcentage volumique d'hydrogène liquide (par exemple environ 5%), pressurisé (par exemple entre 3 et 10 bar abs) et stratifié avec un ciel gazeux chaud (avec des températures pouvant arriver jusqu'à 100 °K). Toutes les parois internes du réservoir 8 peuvent être aussi « chaudes » (normalement à la même température que le liquide avec lequel il est en contact) .

Le ou les réservoirs 8 peuvent être remplis par gravité mais ceci ne permet pas un remplissage rapide du fait de la faible densité du liquide. Le remplissage peut être réalisé également par différence de pression (pression du stockage 4 plus élevée que la pression du réservoir 8, notamment une différence de pression comprise entre entre 300mbar et 1 bar, en fonction de la vitesse de remplissage désirée, ce qui provoque un flux lors d'une mise en communication fluidique).Ces pertes de charge ont pour effet de vaporiser une partie du liquide (pertes de charges singulières dans les vannes ou accidents, ou pertes de charge dans la ligne).

De plus, le contact de l'hydrogène provenant du stockage 4 relativement plus froid avec les parois de métal relativement plus chaudes du réservoir 8 et avec les parois des tuyauteries de transfert causent aussi une importante évaporation.

L'hydrogène évaporé lors de cette opération est alors soit mis à l'air, soit recirculé dans le liquéfacteur 3 tel qu'illustré à la figure 1. Cette solution nécessite donc de dimensionner le liquéfacteur pour un débit supérieur à celui réellement utilisable. De plus, ceci nécessite d'investir dans un système de recirculation des gaz de flash, comprenant un réchauffeur, une capacité de stockage isobare (du type gazomètre) et un compresseur de gaz de flash, le gaz de flash peut aussi dans certains cas être directement renvoyé froid au liquéfacteur. Ceci perturbe cependant les opérations du liquéfacteur du fait de l'instabilité de débit de boil-off provenant des opérations de remplissage des camions.

Ces solutions génèrent donc des pertes de produit (rejet à l'air) ou nécessitent de dimensionner le liquéfacteur 3 et l'unité de récupération de gaz pour pouvoir absorber les gaz de vaporisation produits lors des remplissages de camions.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que le procédé comprend une seconde étape de transfert d'une seconde quantité d'hydrogène liquide dans le réservoir à partir d'une seconde source d'hydrogène liquide comprenant un stockage d'hydrogène liquide, dans laquelle la seconde quantité d'hydrogène liquide est transférée dans le réservoir par différence de pression entre le stockage d'hydrogène liquide et le réservoir.

Par ailleurs, des modes de réalisation de l'invention peuvent comporter l'une ou plusieurs des caractéristiques suivantes :
- la première quantité d'hydrogène liquide fournie par la première source d'hydrogène liquide a une température inférieure à la température de bulle de l'hydrogène à la pression de stockage dans le réservoir,
- la première quantité d'hydrogène liquide transférée dans le réservoir est l'une parmi : une quantité d'hydrogène liquide prédéfinie, une fraction prédéfinie du volume de stockage de liquide dans le réservoir, la quantité d'hydrogène liquide correspondant à un durée prédéfinie de transfert d'hydrogène liquide depuis la première source d'hydrogène liquide vers le réservoir avec un débit déterminé, la quantité d'hydrogène liquide nécessaire pour abaisser la température et la pression dans le réservoir de valeurs respectives prédéterminées, la quantité d'hydrogène liquide nécessaire pour atteindre dans le réservoir des valeurs respectives de température et de pression prédéterminées,
- le procédé comprend, entre la première étape de transfert et la seconde étape de transfert, une étape de diminution de la pression au sein du réservoir comprenant au moins l'un parmi : un soutirage de gaz sous pression du réservoir vers le stockage, notamment par équilibrage de pression, un soutirage de gaz sous pression vers l'extérieur, notamment une évacuation dans l'atmosphère,

- l'étape de diminution de la pression au sein du réservoir comprend un soutirage de gaz sous pression du réservoir vers la phase liquide du stockage, pour condenser au moins en partie ledit gaz sous pression dans le stockage,
- le procédé comprend une étape de transfert d'hydrogène liquide depuis la première source d'hydrogène liquide vers le stockage d'hydrogène liquide à une température ajustée pour maintenir la température dans le stockage dans un intervalle déterminé, notamment une température constante,
- le procédé comprend une étape de diminution de la pression au sein du réservoir via un soutirage de gaz sous pression du réservoir vers l'extérieur, notamment dans l'atmosphère, à l'issue de cette étape de diminution de la pression la pression au sein du réservoir restant supérieure à la pression atmosphérique,
- le procédé comprenant, préalablement à la première étape de transfert, une étape de mesure ou d'estimation des conditions initiales de pression et éventuellement de température au sein du réservoir,
- en fonction des conditions initiales de pression et éventuellement de température au sein du réservoir avant la première étape de transfert, le procédé comprenant ou non une étape de diminution de la pression au sein du réservoir,
- lorsque la pression initiale au sein du réservoir est comprise entre 1,05 et 12bar absolu notamment 3 bar absolu, la seconde étape de transfert est réalisée directement après la première étape de transfert, c'est-à-dire sans soutirage de fluide du réservoir entre ces deux étapes de transfert en vue d'une diminution de la pression dans le réservoir,
- , lorsque la pression initiale au sein du réservoir est comprise entre 4 et 8 bar abs notamment égale à 6 bar abs et que la température initiale dans le réservoir est comprise entre 80 et 120 K notamment égale à 100K, le procédé comprend une étape de diminution de la pression au sein du réservoir entre les deux étapes de transfert,
- lorsque la pression initiale au sein du réservoir est comprise entre 8 et 12 bar abs notamment égale à 10 bar absolu et que la température initiale dans le réservoir est comprise entre 20 et 120 K notamment égale à 70K ou 100K, le procédé comprend une étape de diminution de la pression au sein du réservoir entre les deux étapes de transfert,
- la première quantité d'hydrogène liquide fournie par la première source d'hydrogène liquide a une température comprise entre la température de saturation à la pression du liquide et la température juste supérieure à la température de solidification de l'hydrogène notamment une température de 15K à 23,7K pour une pression de stockage de 2,5 bar,
- la première quantité d'hydrogène liquide fournie par la première source d'hydrogène liquide a une température inférieure de 0,1 à 12 degrés K par rapport à la température de bulle de l'hydrogène à la pression de stockage dans le réservoir.
- la première quantité d'hydrogène liquide fournie par la première source d'hydrogène liquide a une température comprise entre 20,4 K et 33 K pour une pression de stockage comprise entre 1,05 et 12 bar et/ou une température comprise entre 15 K et 27,1 K pour une pression de stockage comprise entre 1,05 et 5bar.

L'invention concerne également une installation de stockage et de distribution d'hydrogène liquéfié comprenant un stockage d'hydrogène liquide à une pression déterminée de stockage, au moins un réservoir mobile à remplir, une source d'hydrogène gazeux, un liquéfacteur comprenant une entrée raccordée à la source et une sortie raccordée au stockage d'hydrogène liquide, le stockage comprenant une conduite de soutirage de liquide comprenant une extrémité raccordée au stockage d'hydrogène liquide et au moins une autre extrémité destinée à être raccordée au(x) réservoir(s) mobile(s), le liquéfacteur étant configuré pour produire et alimenter le stockage avec de l'hydrogène à une température inférieure à la température de bulle de l'hydrogène à la pression de stockage, l'installation comprenant une conduite de récupération de gaz vaporisé comprenant une extrémité destinée à être reliée au(x) réservoir(s) et une extrémité destinée à être reliée au stockage, pour transférer ce gaz vaporisé dans le stockage en vue de sa liquéfaction, l'installation comprenant en outre une conduite de transfert ayant une extrémité raccordée à la sortie du liquéfacteur et une extrémité destinée à être raccordée directement au(x) réservoir(s), l'installation étant configurée pour remplir le au moins un réservoir en transférant une première quantité d'hydrogène liquide du liquéfacteur dans le réservoir via la conduite de transfert puis une seconde quantité d'hydrogène liquide du stockage vers le réservoir via la conduite de soutirage de liquide, l'installation étant configurée pour réaliser éventuellement entre les transferts des première et seconde quantités, une diminution de la pression au sein du réservoir comprenant au moins l'un parmi : un soutirage de gaz sous pression du réservoir vers le stockage via la conduite de récupération, notamment par équilibrage de pression ; une soutirage de gaz sous pression vers l'extérieur, notamment dans l'atmosphère via une conduite de mise à l'air.

Selon d'autres particularités possibles :
- l'installation comprend un ensemble de capteur(s) de mesure ou d'estimation des conditions initiales de pression et éventuellement de température au sein du réservoir avant remplissage et l'installation est configurée réaliser éventuellement, entre les transferts des première et seconde quantités, une diminution de la pression au sein du réservoir en fonction desdites conditions initiales de pression et éventuellement de température au sein du réservoir.

D'autres particularités et avantages apparaîtront à la lecture de la description ci-après, faite en référence aux figures dans lesquelles :
- la figure 1 représente un vue schématique et partielle illustrant la structure et le fonctionnement d'une installation selon l'art antérieur,
- les figures 2 et 3 représentent des vues schématiques et partielles illustrant la structure et le fonctionnement d'un exemple d'installation selon l'invention.

Une installation 1 de stockage et de distribution d'hydrogène liquéfié selon un exemple de réalisation de l'invention est représenté à la figure 2. Les mêmes éléments que ceux de la figure 1 sont désignés par les mêmes références numériques.

L'installation 1 comprend un stockage 4 d'hydrogène liquide à une pression déterminée de stockage. Ce stockage 4 est par exemple un stockage isolé sous vide de grande capacité, par exemple de plusieurs centaines de mètres cubes. Ce stockage 4 contient classiquement une phase liquide avec une phase vapeur, ces deux phases pouvant, du fait de la taille du réservoir et des opérations de remplissage / vidange, ne pas être en équilibre themodynamique.

Classiquement, la pression de stockage est de préférence régulée, par exemple à une valeur fixe (par exemple entre 1,05 et 11 bar, par exemple entre 1,1 et 5 bar notamment 2,5 bar absolu).

Par pression de stockage on entend par exemple la pression moyenne dans le stockage ou en partie basse du stockage ou en partie supérieure (dans le ciel gazeux). En effet, du fait de la faible densité de l'hydrogène, la pression dans la partie inférieure du stockage est sensiblement égale à la pression en partie supérieure.

L'installation comprend en outre une source 2 d'hydrogène gazeux, un liquéfacteur 3 comprenant une entrée raccordée à la source 2 et une sortie raccordée au stockage 4 d'hydrogène liquide.

La source 2 peut être un réseau d'hydrogène et/ou une unité de production d'hydrogène (par exemple vapo-reformage et/ou par électrolyse ou toute autre source appropriée). La source peut ainsi comprendre également la récupération d'hydrogène d'une source impure (gaz résiduaire de raffinerie, hydrogène fatal provenant d'électrolyseur chloro alkalin, ...).

L'hydrogène fourni par la source 2 et liquéfié par le liquéfacteur 3 peut être transféré dans le stockage 4 de façon intermittente et/ou en continu et/ou en cas de baisse du niveau de liquide dans le stockage 4 en dessous d'un seuil déterminé. De préférence, le niveau de liquide dans le stockage 4 est contrôlé automatiquement via l'approvisionnement de la part du liquéfacteur 3 (débit du liquéfacteur 3 et/ou vanne de régulation du débit de liquide fourni au stockage 4).

L'installation comprend en outre une conduite 10 de soutirage de liquide comprenant une extrémité raccordée au stockage 4 d'hydrogène liquide et une extrémité destinée à être raccordée à un ou des réservoir(s) 8 à remplir, notamment des réservoir mobile(s) tels que des citernes montées sur des camions de livraison.

Cette conduite 10 de soutirage peut être pourvue d'une vanne 19, par exemple pilotée, et/ou une pompe ou autre.

Ces camions peuvent en particulier alimenter des réservoirs fixes, notamment de stations de fourniture d'hydrogène à des véhicules.

Ainsi, le remplissage du stockage 4 peut être réalisé via une conduite 12 de remplissage qui débouche dans la partie liquide, notamment dans le fond du stockage 4. Par exemple, cette conduite 12 peut transiter via l'espace d'isolation sous vide à l'inter-parois du stockage 4 (cf. figure 2).

Le transfert/remplissage peut être contrôlé via une vanne 16 (par exemple pilotée) située sur cette conduite 12.

L'exemple d'installation de la figure 2 comprend en outre une conduite 13 de transfert ayant une extrémité raccordée à la sortie du liquéfacteur 3 et une extrémité destinée à être raccordée au(x) réservoir(s) 8 directement (sans passer par le stockage 4). La conduite 13 de transfert peut être munie d'une vanne 20 (de préférence piloté) pour transférer de l'hydrogène liquide du liquéfacteur 3 vers le réservoir 8.

Le liquéfacteur 3 est configuré pour produire un liquide sous refroidi, c'est-à-dire à une température inférieure à la température de bulle de l'hydrogène à la pression du stockage.

Ce liquide dispose donc d'une « réserve d'énergie » avant de commencer à s'évaporer. Ceci peut être obtenu avec un liquéfacteurs à cycle de type « Turbo Brayton » où le fluide de travail est typiquement un mélange à base d'Hélium. Le liquéfacteur 3 peut être par exemple un liquéfacteur dont le fluide de travail comprend ou est constitué d'hélium. Par exemple le liquéfacteur 3 peut comprendre un système cryogénique dit « turbo-Brayton » commercialisé par le demandeur pouvant assurer notamment une réfrigération et une liquéfaction de 15 K à 200K.

Bien entendu, tout autre solution de liquéfaction peut être envisagée. Ainsi, par exemple, d'autres configurations sont possibles avec des cycles à fluide de travail hydrogène comprenant des vannes d'expansion sous vide, ou avec des systèmes de sous refroidissement post liquéfaction de l'hydrogène de type turbine liquide ou cycle hélium additionnel.

Avec ce type de liquéfacteur 3, il est possible de fournir de l'hydrogène liquide sous-refroidi à des températures aussi basses que 15 °K et à des pressions aussi élevées que 10 bar absolu. Dans ce cas, le réservoir 8 peut être rempli en plusieurs étapes et selon plusieurs cas de figures décrits ci-dessous.

En particulier, selon une première phase, le réservoir 8 est rempli partiellement directement par le liquéfacteur 3.

Dans cette première phase, le réservoir 8 est rempli via la conduite 13 de transfert avec de l'hydrogène provenant directement du liquéfacteur 3, qui est capable de fournir de l'hydrogène à la pression initiale régnant dans le réservoir 8 (pression d'arrivée du réservoir 8), qui peut être supérieure à la pression dans le stockage 4.

Le liquide sous-refroidi transféré dans le réservoir 8 (de préférence en partie supérieure) entre en contact avec le ciel gazeux chaud du réservoir 8. Ceci fait abaisser la température et la pression du réservoir 8 en condensant une partie du ciel gazeux.

Pendant cette première phase, le réservoir 8 peut passer dans un état stratifié (pas d'équilibre thermodynamique global lié à une non homogénéité des températures à l'équilibre). Le liquide sous-refroidi entrera en contact aussi avec les parois internes (métal) relativement plus chaudes du réservoir 8 qui vont se refroidir.

Dans cette première étape ou première phase, la quantité d'hydrogène liquide transférée dans le réservoir 8 peut être l'une parmi :
- une quantité d'hydrogène liquide prédéfinie,
- une fraction prédéfinie du volume de stockage de liquide dans le réservoir 8, par exemple un dixième,
- la quantité d'hydrogène liquide correspondant à un durée prédéfinie de transfert d'hydrogène liquide depuis la première source d'hydrogène liquide vers le réservoir 8 avec un débit déterminé,
- la quantité d'hydrogène liquide nécessaire pour abaisser la température et la pression dans le réservoir 8 de valeurs respectives prédéterminées, la quantité d'hydrogène liquide nécessaire pour atteindre dans le réservoir 8 des valeurs respectives de température et de pression prédéterminées.

Dans une deuxième phase possible, le réservoir 8 peut être dépressurisé au moins partiellement dans le stockage 4.

Au cours de cette deuxième phase possible, le réservoir 8 peut être dépressurisé par soutirage de gaz qui est renvoyé (via une conduite 11 de récupération par exemple) dans la phase liquide du stockage 4.

Ce gaz chaud est alors en partie ou totalement condensé dans le stockage 4 par échange direct d'énergie avec le liquide sous refroidi du stockage 4.

Afin de condenser totalement cet hydrogène gazeux recirculé et maintenir la température du stockage 4 constante après chaque remplissage, la température de l'hydrogène liquide envoyé dans le stockage 4 par le liquéfacteur 3 peut être éventuellement ajusté à la baisse.

Dans une troisième phase possible, le réservoir 8 peut être dépressurisé au moins partiellement vers l'atmosphère ou une zone de récupération jusqu'à une pression inférieure à la pression du stockage 4. Ceci peut être réalisé par exemple via une conduite 15 de mise à l'air qui peut être munie d'une vanne (par exemple commandé).

De préférence cette troisième phase de dépressurisation est interrompue de sorte que la pression dans le réservoir 8 est à une pression strictement supérieure à la pression atmosphérique afin d'éviter tout problème de cryopompage d'air vers le réservoir 8.

Dans une quatrième phase le réservoir 8 est rempli (de préférence jusqu'à son niveau de remplissage cible) à partir du stockage 4 et de préférence par différence de pression entre le stockage 4 et le réservoir 8. Dans cette quatrième phase le réservoir 8 est de préférence à une pression suffisamment basse pour que le remplissage par différence de pression avec le stockage 4 soit possible (écart de pression entre 300 et 1000 mbar). Ce transfert peut être poursuivi ainsi jusqu'à ce que le liquide atteigne le niveau souhaité dans le réservoir 8.

Le procédé de remplissage utilise au moins la première phase et peut utiliser l'une ou plusieurs des autres phases définies ci-dessus.

De préférence, les conditions initiales du réservoir 8 (pression et/ou température) peuvent être mesurées ou déterminées. Le processus de remplissage peut en effet utiliser toutes ces phases ou omettre l'une ou plusieurs d'entre elles comme illustré dans les exemples décrits ci-après.

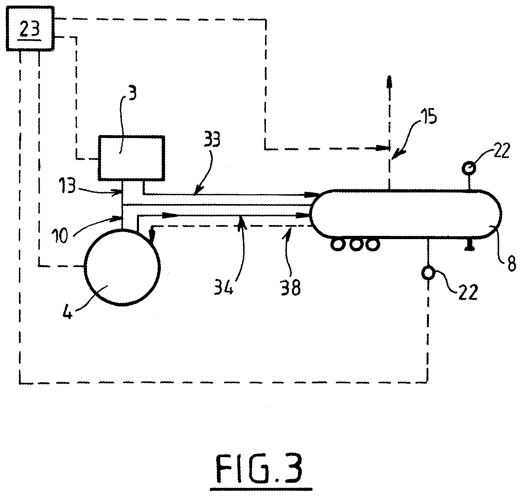

Par exemple, comme illustré à la figure 3, le dispositif peut comporter un ensemble 22 de capteur(s) de pression et/ou de température dans le réservoir 8.

Ainsi, lorsque les conditions initiales dans le réservoir 8 à remplir sont les suivantes : pression comprise entre 1 et 5bar et de préférence égale à 3 bar abs et température du ciel gazeux du réservoir est comprise entre 20K et 120K et de préférence égale à 70K, de préférence le processus de remplissage utilise des 1^{ère} et 4^{ème} phases et omet les 2ème et 3^{ème} phases.

Lorsque la pression initiale est comprise entre 5 et 8 bar et de préférence égale à 6 bar abs et que la température du ciel gazeux du réservoir est comprise entre 20 et 120K et de préférence égale à 100K, de préférence le processus de remplissage utilise les quatre phases (c'est-à-dire y compris les phases intermédiaires de dépressurisation du réservoir 8).

Lorsque la pression initiale est comprise entre 8 et 12 bar et de préférence égale à 10 bar abs et que la température du ciel gazeux du réservoir est comprise entre 20 et 120K et de préférence égale à 70K, de préférence le processus de remplissage utilise les quatre phases.

Les inventeurs ont mis en évidence que cette stratégie de remplissage permet de réduire les pertes de vaporisation provenant de différentes sources.

Ce procédé de remplissage utilise avantageusement la capacité de sous refroidissement du liquéfacteur 3 (type « Turbo Brayton » par exemple) et aussi sa capacité de fournir de l'hydrogène liquide à des pressions relativement élevées (par exemple jusqu'à 10 bar absolu). Ceci permet d'éviter un système de recirculation du gaz vaporisé et le surdimensionnement du liquéfacteur 3. Ceci peut être éviter au prix d'un léger surcoût énergétique dû à la liquéfaction comme explicité ci-après.

La première phase (première étape transfert) permet de mettre le réservoir 8 en équilibre thermodynamique et d'abaisser considérablement sa pression et sa température.

Lors de la première étape (phase 1), le fluide chaud présent dans le réservoir 8 peut être conservé dans le réservoir 8 en fermant la vanne 21 sur la conduite 11 de retour au stockage 4 jusqu'à ce que la pression dans le réservoir 8 ait baissé suffisamment (jusqu'à un niveau de pression déterminé) du fait de la condensation des vapeurs chaudes par l'hydrogène liquide sous-refroidi provenant du liquéfacteur 3.

Après un temps déterminé par la pression dans le réservoir 8, ce remplissage partiel direct à partir du liquéfacteur 3 est arrêté et, selon la pression dans le réservoir 8, la poursuite (et la fin) du remplissage du réservoir 8 peut être réalisée par différence de pression avec le stockage 4 (phase 4) .

Si au contraire la pression du réservoir 8 reste trop élevée à l'issue de la première phase/étape, le réservoir 8 peut d'abord être dépressurisé dans le fond du stockage 4 (phase 2 qui est une étape de diminution de la pression au sein du réservoir 8) et/ou dépressurisé vers l'extérieur (phase 3 qui est une étape de diminution de la pression au sein du réservoir 8).

En cas de dépressurisation dans le stockage 4, le niveau dans le stockage 4 peut augmenter légèrement (moins de 1% en volume par exemple).

Pour condenser toute la masse de gaz chaud transféré dans le stockage 4 une quantité suffisante d'hydrogène liquide sous refroidi doit être envoyé au stockage par le liquéfacteur 3.

Le réglage du niveau de sous refroidissement du liquide en sortie de liquéfacteur 3 pourra ainsi être contrôlé pour limiter ou d'annuler les pertes d'hydrogène par évaporation.

Dans le cas où les conditions initiales du réservoir 8 sont trop "extrêmes" (pression égale ou supérieure à 10 bar abs et température du gaz égale ou supérieure à 100 °K par exemple), il peut être avantageux de ne pas réaliser la phase 2 ou seulement partiellement, pour éviter que la masse de gaz chaud dépressurisée ne perturbe les conditions du stockage 4 nécessitant, pour compenser, une trop grande quantité d'hydrogène liquide de la part du liquéfacteur 3.

En effet, cette masse additionnelle d'hydrogène liquide fournie par le liquéfacteur 3 peut causer un surcoût important. Pour éviter ceci, une solution alternative ou cumulative à la phase 2 peut être de dépressuriser le gaz chaud du réservoir 8 vers l'atmosphère (phase 3).

En revanche, dans des cas plus favorables (par exemple une pression initiale inférieure ou égale à 3 bar abs et une température initiale inférieure ou égale à 70 °K), il est possible de remplir le réservoir 8 sans l'étape de diminution de pression (phases 2 et/ou 3).

Ainsi, dans ces situations la première étape (phase 1) peut être suffisante pour abaisser la pression dans le réservoir 8 en dessous de la pression du stockage 4 permettant un remplissage par différence de pression.

A noter qu'en cas de différence de pression insuffisante il est également possible d'utiliser une pompe pour transférer le liquide du stockage 4 verts le réservoir 8.

Les inventeurs ont mis en évidence que ce procédé permet de diminuer jusqu'à un facteur de huit à dix les pertes par évaporation par rapport à un remplissage classique.

Cette solution permet de s'affranchir d'un système de recirculation des gaz évaporés comme décrit en préambule.

La présente solution permet de diminuer l'investissement de l'installation ainsi au prix d'une consommation énergétique de liquéfaction faiblement augmentée.

De plus, en fonction du prix de l'énergie, de la valeur de l'hydrogène, le système décrit permet au global une économie globale sur le coût de production de l'hydrogène liquide livré dans les réservoirs 8.

La solution permet également d'augmenter le cas échéant le sous-refroidissement du liquide lorsque les quantités d'hydrogène disponibles sont plus faibles. Ceci permet avantageusement de régler le niveau de sous-refroidissement du liquide contenu dans le stockage 4. Ainsi, ce liquide dans le stockage 4 possède une « réserve d'énergie » ou « réserve de frigories » avant de commencer à s'évaporer.

Dans le cas où l'installation permet le remplissage de plusieurs réservoirs simultanément (plusieurs conduites 11, 13 ou plusieurs extrémités à ces conduites), de préférence l'installation 1 peut être configurée pour séquencer les différentes étapes (phases) pour permettre d'utiliser de façon séquentielle la première étape de transfert (phase 1) entre les différents réservoirs 8. De même, l'installation 1 peut être configurée pour séquencer les autres étapes/phases pour les différents réservoirs 8 à remplir.

Par « configurée pour » on entend que l'installation peut être commandé manuellement et/ou automatiquement. Par exemple, comme schématisé à la figure 3, l'installation 1 peut comprendre un organe 23 électronique de commande comprenant par exemple un ordinateur ou microprocesseur configuré (programmé/commandé) pour contrôler et piloter tout ou partie des organes de l'installation (liquéfacteur, vanne (s), ...) .

Le fluide chaud récupéré par la conduite 11 de récupération peut donc être renvoyé dans le stockage 4 pour y être refroidi/condensé. Cette configuration permet avantageusement de remplir des réservoirs 8 avec de l'hydrogène sous-refroidi à une pression supérieure à la pression maximale d'utilisation du stockage 4, sans utiliser de pompe.

La vanne 21 de la conduite 11 de retour permet ainsi de conserver la pression et la masse d'hydrogène dans le stockage 4 par reliquéfaction directe.

De préférence, le liquéfacteur 3 est configuré pour produire et alimenter le stockage 4 avec de l'hydrogène à une température inférieure à la température de bulle de l'hydrogène à la pression de stockage.

La pression de stockage est comprise par exemple entre 1,05 bar et 5 bar notamment 2,5 bar.

Par exemple, l'hydrogène liquide produit par le liquéfacteur 3 et transféré dans le stockage 4 a une température inférieure de 0,1 à 12 degrés K par rapport à la température de bulle de l'hydrogène à la pression de stockage, notamment à une température comprise entre 16 K et 23 K pour une pression de stockage comprise entre 1,05 et 11 bar notamment une température de 20,4 à 21K pour une pression de stockage de 2,5 bar

Par exemple, l'hydrogène liquide produit par le liquéfacteur et transféré dans le stockage 4 à une température comprise entre la température de saturation à la pression du liquide et la température de saturation à la pression de 1,1 bar abs, notamment une température de 20,4 à 23,7K pour une pression de stockage de 2,5 bar.

L'hydrogène liquide produit par le liquéfacteur et transféré dans le stockage 4 peut avoir une température comprise entre la température de saturation à la pression du liquide et la température juste supérieure à la température de solidification de l'hydrogène notamment une température de 15K à 23,7K pour une pression de stockage de 2,5 bar.

De même, l'hydrogène liquide produit par le liquéfacteur est transféré directement dans le réservoir 8 et éventuellement également dans le stockage 4 et peut avoir une température comprise entre la température de saturation à la pression du liquide et la température juste supérieure à la température de solidification de l'hydrogène notamment une température de 15K à 23.7K pour une pression de stockage de 2,5 bar.

C'est-à-dire que le liquéfacteur 3 produit un liquide qui est sous refroidi par rapport aux configurations de l'art antérieur, c'est-à-dire à une température inférieure à la température de bulle de l'hydrogène à la pression du stockage 4.

Par température de bulle on désigne la température (à une pression donnée) à partir de laquelle apparaissent les premières bulles d'ébullition (vaporisation).

De préférence, le liquéfacteur 3 fournit directement l'hydrogène liquide aux conditions thermodynamiques sous refroidies. Par exemple, en sortie du liquéfacteur 3 l'hydrogène a des conditions de sous refroidissement qui tiennent éventuellement compte du réchauffement dans le circuit menant jusqu'au stockage 4.

De préférence, les phases liquide et gazeuse d'hydrogène ne sont pas à l'équilibre thermodynamique dans le stockage 4. C'est-à-dire que les phases gazeuse et liquide d'hydrogène du stockage 4 ont des températures respectives différentes. En particulier, l'hydrogène peut être à maintenu à une pression stable (pression de stockage) mais la température de l'hydrogène, notamment gazeux peut être stratifiée entre la phase liquide froide en partie inférieure et la partie gazeuse plus chaude en partie supérieure.

Dans cette configuration (températures différentes entre la partie gazeuse et la partie liquide), la grande majorité de la partie gazeuse peut être à une température de 40K.

Or, le point critique de l'hydrogène est de 12,8 bar à 33K. Il n'est donc pas possible de condenser le gaz en augmentant la pression du gaz de manière isotherme à 40K.

On peut alors facilement conclure qu'en première approche, une pressurisation du stockage 4 par ajout de liquide froid par le bas du stockage 4 est possible sans condensation du ciel gazeux.

Il est ainsi possible d'obtenir un système thermodynamique métastable (ou instable) comprenant un ciel gazeux relativement « chaud » (à une température supérieure ou égale à 40K par exemple) et une partie liquide ayant une température correspondante à son point de bulle, ou inférieure. Il s'agit là d'un cas particulier d'un liquide sous refroidi associé à un ciel gazeux stratifié en température.

La pression de stockage peut être comprise et maintenue entre 1,05 bar et 5 bar notamment 2,5 bar.

Le stockage 4 et le réservoir 8 peuvent être à double parois et isolés sous vide.

L'installation 1 peut comprendre une conduite 14 ayant une extrémité raccordée à la sortie du liquéfacteur et une extrémité débouchant dans la phase gazeuse du stockage 4 (en partie supérieure).

L'installation peut ainsi être configurée pour maintenir le niveau de liquide dans le stockage 4 au-dessus d'un seuil déterminé en approvisionnant automatiquement le stockage avec de l'hydrogène produit par le liquéfacteur 3.

Le contrôle de la pression dans le stockage 4 peut être réalisé par exemple en contrôlant la pression du ciel gazeux. Par exemple, la pression peut être augmentée (dispositif classique d'injection d'hydrogène plus chaud dans le ciel gazeux non représenté sur la figure par soucis de simplification). C'est-à-dire qu'un dispositif d'augmentation de pression peut prélever du liquide dans le stockage, le réchauffer et le réinjecter dans la partie supérieure du stockage 4.

Pour diminuer la pression dans le stockage 4, une solution peut consister à injecter de l'hydrogène liquide provenant du liquéfacteur 3 en pluie dans la partie gazeuse. Ceci peut être réalisé via une conduite 14 appropriée munie d'une vanne 17 par exemple. Pour diminuer la pression dans le stockage 4 il est également possible de rejeter à l'air une partie de l'hydrogène gazeux contenu dans le ciel gazeux (par exemple conduite 18 munie d'une vanne non représentée).

L'invention peut s'appliquer à d'autres gaz que l'hydrogène le cas échéant.

## Revendications

1. Procédé de remplissage d'un réservoir (8) d'hydrogène liquide, par exemple un réservoir mobile d'une semi-remorque, le procédé comprenant une première étape (33) de transfert d'une première quantité d'hydrogène liquide dans le réservoir (8) à partir d'une première source d'hydrogène liquide comprenant un liquéfacteur (3) d'hydrogène, la première quantité d'hydrogène liquide étant prévue pour abaisser la température et la pression dans le réservoir (8), le procédé comprenant une seconde étape (34) de transfert d'une seconde quantité d'hydrogène liquide dans le réservoir (8) à partir d'une seconde source d'hydrogène liquide comprenant un stockage (4) d'hydrogène liquide, dans lequel la première quantité d'hydrogène liquide est transférée directement du liquéfacteur (3) d'hydrogène dans le réservoir (8) et la seconde quantité d'hydrogène liquide est transférée dans le réservoir (8) par différence de pression entre le stockage (4) d'hydrogène liquide et le réservoir (8).

2. Procédé selon la revendication 1, **caractérisé en ce que** la première quantité d'hydrogène liquide fournie par la première source (3) d'hydrogène liquide a une température inférieure à la température de bulle de l'hydrogène à la pression de stockage dans le réservoir (8) .

3. Procédé selon l'une quelconque des revendications 1 ou 2, **caractérisé en ce que** la première quantité d'hydrogène liquide transférée dans le réservoir (8) est l'une parmi : une quantité d'hydrogène liquide prédéfinie, une fraction prédéfinie du volume de stockage de liquide dans le réservoir (8), la quantité d'hydrogène liquide correspondant à un durée prédéfinie de transfert d'hydrogène liquide depuis la première source d'hydrogène liquide vers le réservoir (8) avec un débit déterminé, la quantité d'hydrogène liquide nécessaire pour abaisser la température et la pression dans le réservoir (8) de valeurs respectives prédéterminées, la quantité d'hydrogène liquide nécessaire pour atteindre dans le réservoir (8) des valeurs respectives de température et de pression prédéterminées.

4. Procédé selon l'une quelconque des revendications 1 à 3, **caractérisé en ce qu'**il comprend, entre la première étape (33) de transfert et la seconde étape (34) de transfert, une étape (38, 15) de diminution de la pression au sein du réservoir (8) comprenant au moins l'un parmi : un soutirage (38) de gaz sous pression du réservoir (8) vers le stockage (4), notamment par équilibrage de pression, un soutirage (15) de gaz sous pression vers l'extérieur, notamment une évacuation dans l'atmosphère.

5. Procédé selon la revendication 4, **caractérisé en ce que** l'étape de diminution de la pression au sein du réservoir (8) comprend un soutirage (38) de gaz sous pression du réservoir (8) vers la phase liquide du stockage (4), pour condenser au moins en partie ledit gaz sous pression dans le stockage (4).

6. Procédé selon la revendication 4 ou 5, **caractérisé en ce qu'**il comprend une étape de transfert d'hydrogène liquide depuis la première source (3) d'hydrogène liquide vers le stockage (4) d'hydrogène liquide à une température ajustée pour maintenir la température dans le stockage (4) dans un intervalle déterminé, notamment une température constante.

7. Procédé selon l'une quelconque des revendications 4 à 6, **caractérisé en ce qu'**il comprend une étape de diminution de la pression au sein du réservoir (8) via un soutirage (15) de gaz sous pression du réservoir (8) vers l'extérieur, notamment dans l'atmosphère et **en ce que** ce que à l'issue de cette étape de diminution de la pression la pression au sein du réservoir (8) reste supérieure à la pression atmosphérique.

8. Procédé de remplissage selon l'une quelconque des revendications 1 à 7 **caractérisé en ce qu'**il comprend, préalablement à la première étape (33) de transfert, une étape de mesure ou d'estimation des conditions initiales de pression et éventuellement de température au sein du réservoir (8).

9. Procédé de remplissage selon la revendication 8 combinée à l'une quelconque des revendications 4 à 7, **caractérisé en ce que**, en fonction des conditions initiales de pression et éventuellement de température au sein du réservoir (8) avant la première étape (33) de transfert, le procédé comprend ou non une étape de diminution de la pression au sein du réservoir (8).

10. Procédé de remplissage selon la revendications 8 ou 9 combinée à l'une quelconque des revendications 1 à 6, **caractérisé en ce que** lorsque la pression initiale au sein du réservoir (8) est comprise entre 1,05 et 12bar absolu notamment 3 bar absolu, la seconde étape de transfert est réalisée directement après la première étape de transfert, c'est-à-dire sans soutirage de fluide du réservoir (8) entre ces deux étapes de transfert en vue d'une diminution de la pression dans le réservoir (8).

11. Procédé de remplissage selon l'une quelconque des revendications 8 à 10 combinée à l'une quelconque des revendications 4 à 7, **caractérisé en ce que**, lorsque la pression initiale au sein du réservoir (8) est comprise entre 4 et 8 bar abs notamment égale à 6 bar abs et que la température initiale dans le réservoir (8) est comprise entre 80 et 120 K notamment égale à 100K, le procédé comprend une étape de diminution de la pression au sein du réservoir (8) entre les deux étapes de transfert.

12. Procédé de remplissage selon l'une quelconque des revendications 8 à 10 combinée à l'une quelconque des revendications 4 à 7, **caractérisé en ce que** lorsque la pression initiale au sein du réservoir (8) est comprise entre 8 et 12 bar abs notamment égale à 10 bar absolu et que la température initiale dans le réservoir (8) est comprise entre 20 et 120 K notamment égale à 70K ou 100K, le procédé comprend une étape de diminution de la pression au sein du réservoir (8) entre les deux étapes de transfert.

13. Installation de stockage et de distribution d'hydrogène liquéfié comprenant un stockage (4) d'hydrogène liquide à une pression déterminée de stockage, au moins un réservoir (8) mobile à remplir, une source (2) d'hydrogène gazeux, un liquéfacteur (3) comprenant une entrée raccordée à la source (2) et une sortie raccordée au stockage (4) d'hydrogène liquide, le stockage (4) comprenant une conduite (10) de soutirage de liquide comprenant une extrémité raccordée au stockage (4) d'hydrogène liquide et au moins une autre extrémité destinée à être raccordée au (x) réservoir(s) (8) mobile(s), le liquéfacteur (3) étant configuré pour produire et alimenter le stockage (4) avec de l'hydrogène à une température inférieure à la température de bulle de l'hydrogène à la pression de stockage, l'installation comprenant une conduite (11) de récupération de gaz vaporisé comprenant une extrémité destinée à être reliée au(x) réservoir(s) (8) et une extrémité destinée à être reliée au stockage (4), pour transférer ce gaz vaporisé dans le stockage (4) en vue de sa liquéfaction, l'installation comprenant en outre une conduite (13) de transfert ayant une extrémité raccordée à la sortie du liquéfacteur (3) et une extrémité destinée à être raccordée directement au(x) réservoir(s) (8), l'installation étant configurée pour remplir le au moins un réservoir (8) en transférant une première quantité d'hydrogène liquide du liquéfacteur (3) dans le réservoir (8) via la conduite (13) de transfert puis une seconde quantité d'hydrogène liquide du stockage (4) vers le réservoir (8) via la conduite (10) de soutirage de liquide, l'installation étant configurée pour réaliser éventuellement entre les transferts des première et seconde quantités, une diminution de la pression au sein du réservoir comprenant au moins l'un parmi : un soutirage de gaz sous pression du réservoir (8) vers le stockage (4) via la conduite (11) de récupération, notamment par équilibrage de pression ; une soutirage de gaz sous pression vers l'extérieur, notamment dans l'atmosphère via une conduite (15) de mise à l'air.

14. Installation selon la revendication 13, **caractérisé en ce qu'**elle comprend un ensemble de capteur(s) (22) de mesure ou d'estimation des conditions initiales de pression et éventuellement de température au sein du réservoir (8) avant remplissage et **en ce que** l'installation est configurée réaliser ou non, entre les transferts des première et seconde quantités, une diminution de la pression au sein du réservoir (8) en fonction desdites conditions initiales de pression et éventuellement de température au sein du réservoir (8).

## Patentansprüche

1. Verfahren zum Befüllen eines Behälters (8), zum Beispiel eines mobilen Behälters eines Sattelaufliegers, mit Flüssigwasserstoff, wobei das Verfahren einen ersten Schritt (33) des Transfers einer ersten Flüssigwasserstoffmenge in den Behälter (8) ausgehend von einer einen Wasserstoffverflüssiger (3) enthaltenden ersten Flüssigwasserstoffquelle enthält, wobei die erste Flüssigwasserstoffmenge vorgesehen ist, um die Temperatur und den Druck im Behälter (8) zu senken, wobei das Verfahren einen zweiten Schritt (34) des Transfers einer zweiten Flüssigwasserstoffmenge in den Behälter (8) ausgehend von einer einen Speicher (4) von Flüssigwasserstoff enthaltenden zweiten Flüssigwasserstoffquelle enthält, wobei die erste Flüssigwasserstoffmenge direkt vom Wasserstoffverflüssiger (3) in den Behälter (8) transferiert wird und die zweite Flüssigwasserstoffmenge durch Druckunterschied zwischen dem Speicher (4) von Flüssigwasserstoff und dem Behälter (8) in den Behälter (8) transferiert wird.

2. Verfahren nach Anspruch 1, **dadurch gekennzeichnet, dass** die von der ersten Flüssigwasserstoffquelle (3) gelieferte Flüssigwasserstoffmenge eine niedrigere Temperatur hat als die Blasentemperatur des Wasserstoffs beim Speicherdruck im Behälter (8).

3. Verfahren nach einem der Ansprüche 1 oder 2, **dadurch gekennzeichnet, dass** die in den Behälter (8) transferierte erste Flüssigwasserstoffmenge eine ist von: einer vordefinierten Flüssigwasserstoffmenge, einem vordefinierten Bruchteil des Flüssigkeitsspeichervolumens im Behälter {8), der Flüssigwasserstoffmenge, die einer vordefinierten Transferdauer von Flüssigwasserstoff von der ersten Flüssigwasserstoffquelle zum Behälter (8) mit einem bestimmten Durchsatz entspricht, der Flüssigwasserstoffmenge, die notwendig ist, um die Temperatur und den Druck im Behälter (8) um jeweilige vorbestimmte Werte zu senken, der Flüssigwasserstoffmenge, die notwendig ist, um im Behälter (8) vorbestimmte Temperatur- und Druckwerte zu erreichen.

4. Verfahren nach einem der Ansprüche 1 bis 3, **dadurch gekennzeichnet, dass** es zwischen dem ersten Transferschritt {33) und dem zweiten Transferschritt (34) einen Schritt (38, 15) der Verringerung des Drucks innerhalb des Behälters (8) enthält, der mindestens eins enthält von: einer Entnahme (38} von Druckgas vom Behälter (8) zum Speicher (4), insbesondere durch Druckausgleich, einer Entnahme (25) von Druckgas nach außen, insbesondere einem Abführen in die Atmosphäre.

5. Verfahren nach Anspruch 4, **dadurch gekennzeichnet, dass** der Schritt der Verringerung des Drucks innerhalb des Behälters (8) eine Entnahme (38} von Druckgas aus dem Behälter (8) zur flüssigen Phase des Speichers {4) enthält, um das Druckgas im Speicher (4) zumindest zum Teil zu kondensieren.

6. Verfahren nach Anspruch 4 oder 5, **dadurch gekennzeichnet, dass** es einen Schritt des Transfers von Flüssigwasserstoff von der ersten Flüssigwasserstoffquelle (3) zum Flüssigwasserstoffspeicher (4) bei einer angepassten Temperatur enthält, um die Temperatur im Speicher (4) in einem bestimmten Bereich zu halten, insbesondere eine konstante Temperatur.

7. Verfahren nach einem der Ansprüche 4 bis 6, **dadurch gekennzeichnet, dass** es einen Schritt der Verringerung des Drucks innerhalb des Behälters (8) mittels einer Entnahme {1} von Druckgas aus dem Behälter (8) nach außen, insbesondere in die Atmosphäre, enthält, und dass nach diesem Schritt der Verringerung des Drucks der Druck innerhalb des Behälters (8) höher bleibt als der Atmosphärendruck.

8. Befüllungsverfahren nach einem der Ansprüche 1 bis 7, **dadurch gekennzeichnet, dass** es vor dem ersten Transferschritt (33) einen Schritt der Messung oder Schätzung der Anfangsbedingungen von Druck und ggf. Temperatur innerhalb des Behälters {8} enthält.

9. Verfahren nach Anspruch 8 kombiniert mit einem der Ansprüche 4 bis 7, **dadurch gekennzeichnet, dass** abhängig von den Anfangsbedingungen von Druck und ggf. Temperatur innerhalb des Behälters {8} vor dem ersten Transferschritt (33) das Verfahren einen Schritt der Verringerung des Drucks innerhalb des Behälters (8} enthält oder nicht.

10. Befüllungsverfahren nach Anspruch 8 oder 9 kombiniert mit einem der Ansprüche 1 bis 6, **dadurch gekennzeichnet, dass**, wenn der Anfangsdruck innerhalb des Behälters (8) zwischen 1,05 und 12 bar absolut liegt, insbesondere 3 bar absolut, der zweite Transferschritt direkt nach dem ersten Transferschritt durchgeführt wird, d.h. ohne Entnahme von Flüssigkeit aus dem Behälter {8) zwischen diesen zwei Transferschritten mit dem Ziel einer Verringerung des Drucks im Behälter (8}.

11. Befüllungsverfahren nach einem der Ansprüche 8 bis 10 kombiniert mit einem der Ansprüche 4 bis 7, **dadurch gekennzeichnet, dass**, wenn der Anfangsdruck innerhalb des Behälters zwischen 4 und 8 bar abs liegt, insbesondere gleich 6 bar abs ist, und wenn die Anfangstemperatur im Behälter {8) zwischen 80 und 120 K liegt, insbesondere gleich 100 K ist, das Verfahren einen Schritt der Verringerung des Drucks innerhalb des Behälters (8) zwischen den zwei Transferschritten enthält.

12. Befüllungsverfahren nach einem der Ansprüche 8 bis 10 kombiniert mit einem der Ansprüche 4 bis 7, **dadurch gekennzeichnet, dass**, wenn der Anfangsdruck im Behälter (8) zwischen 8 und 12 bar abs liegt, insbesondere gleich 30 bar absolut ist, und die Anfangstemperatur im Behälter (8} zwischen 20 und 120 K liegt, insbesondere gleich 70 K oder 100 K ist, das Verfahren einen Schritt der Verringerung des Drucks innerhalb des Behälters (8) zwischen den zwei Transferschritte enthält.

13. Anlage zum Speichern und zur Verteilung von verflüssigtem Wasserstoff, die einen Speicher (4) von Flüssigwasserstoff auf einem bestimmten Speicherdruck, mindestens einen zu befüllenden mobilen Behälter (8), eine Quelle (2) von gasförmigem Wasserstoff, einen Verflüssiger {3) enthält, der einen an die Quelle (2) angeschlossenen Eingang und einen an den Speicher (4) von Flüssigwasserstoff angeschlossenen Ausgang enthält, wobei der Speicher (4) eine Leitung (10) zum Entnahme von Flüssigkeit enthält, die ein an den Speicher (4) von Flüssigwasserstoff angeschlossenes Ende und mindestens ein anderes Ende enthält, das dazu bestimmt ist, an den(die) mobilen Behälter {8) angeschlossen zu werden, wobei der Verflüssiger (3) konfiguriert ist, Wasserstoff zu produzieren und den Speicher (4) auf einer Temperatur niedriger als die Blasentemperatur des Wasserstoffs beim Speicherdruck zu versorgen, wobei die Anlage eine Leitung (11) zur Wiedergewinnung von verdunstetem Gas enthält, die ein Ende, das dazu bestimmt ist, mit dem(den) Behälter(n) (8) verbunden zu werden, und ein Ende hat, das dazu bestimmt ist, mit dem Speicher (4) verbunden zu werden, um dieses verdunstete Gas für seine Verflüssigung in den Speicher (4) zu transferieren, wobei die Anlage außerdem eine Transferleitung (13) enthält, die ein an den Ausgang des Verflüssigers (3) angeschlossenes Ende und ein Ende enthält, das dazu bestimmt ist, direkt an den(die) Behälter (8) angeschlossen zu werden, wobei die Anlage konfiguriert ist, den mindestens einen Behälter (8} zu befüllen, indem eine erste Flüssigwasserstoffmenge vom Verflüssiger (3) mittels der Transferleitung (13) in den Behälter (8) und dann eine zweite Flüssigwasserstoffmenge mittels der Flüssigkeitsentnahmeleitung (10) vom Speicher (4) zum Behälter (8) transferiert wird, wobei die Anlage konfiguriert ist, ggf. zwischen den Transfers der ersten und zweiten Mengen eine Verringerung des Drucks im Behälter herzustellen, die mindestens eins enthält von: einer Entnahme von Druckgas vom Behälter (8) zum Speicher (4) mittels der Wiedergewinnungsleitung (11), insbesondere durch Druckausgleich; einer Entnahme von Druckgas nach außen, insbesondere in die Atmosphäre, mittels einer Belüftungsleitung (15}.

14. Anlage nach Anspruch 13, **dadurch gekennzeichnet, dass** sie eine Einheit von Mess- oder Schätzsensoren (22) der Anfangsbedingungen von Druck und ggf. Temperatur im Behälter (8} vor dem Befüllen enthält, und dass die Anlage konfiguriert ist, zwischen den Transfers der ersten und zweiten Mengen eine Verringerung des Drucks im Behälter (8) abhängig von den Anfangsbedingungen von Druck und ggf. Temperatur im Behälter (8} durchzuführen oder nicht.

## Claims

1. Method of filling a liquid hydrogen tank (8), for example a mobile tank of a semitrailer, the method comprising a first stage (33) of transfer of a first amount of liquid hydrogen into the tank (8) from a first source of liquid hydrogen comprising a hydrogen liquefier (3), the first amount of liquid hydrogen being provided in order to lower the temperature and the pressure in the tank (8), the method comprising a second stage (34) of transfer of a second amount of liquid hydrogen into the tank (8) from a second source of liquid hydrogen comprising a liquid hydrogen storage facility (4), in which the first amount of liquid hydrogen is transferred directly from the hydrogen liquefier (3) into the tank (8) and the second amount of liquid hydrogen is transferred into the tank (8) by pressure difference between the liquid hydrogen storage facility (4) and the tank (8) .

2. Method according to Claim 1, **characterized in that** the first amount of liquid hydrogen supplied by the first source (3) of liquid hydrogen has a temperature below the bubble point of hydrogen at the storage pressure in the tank (8).

3. Method according to either one of Claims 1 and 2, **characterized in that** the first amount of liquid hydrogen transferred into the tank (8) is one from: a predefined amount of liquid hydrogen, a predefined fraction of the volume of liquid storage in the tank (8), the amount of liquid hydrogen corresponding to a predefined duration of transfer of liquid hydrogen from the first source of liquid hydrogen to the tank (8) with a specific flow rate, the amount of liquid hydrogen necessary to lower the temperature and the pressure in the tank (8) by respective predetermined values, the amount of liquid hydrogen necessary to achieve, in the tank (8), respective predetermined temperature and pressure values.

4. Method according to any one of Claims 1 to 3, **characterized in that** it comprises, between the first transfer stage (33) and the second transfer stage (34), a stage (38, 15) of reduction in the pressure within the tank (8) comprising at least one from: a withdrawal (38) of pressurized gas from the tank (8) to the storage facility (4), in particular by pressure balancing, a withdrawal (15) of pressurized gas to the outside, in particular a discharge to the atmosphere.

5. Method according to Claim 4, **characterized in that** the stage of reduction in the pressure within the tank (8) comprises a withdrawal (38) of pressurized gas from the tank (8) to the liquid phase of the storage facility (4), in order to condense, at least in part, said pressurized gas in the storage facility (4).

6. Method according to Claim 4 or 5, **characterized in that** it comprises a stage of transfer of liquid hydrogen from the first source (3) of liquid hydrogen to the liquid hydrogen storage facility (4) at a temperature adjusted in order to maintain the temperature in the storage facility (4) within a specific interval, in particular a constant temperature.

7. Method according to any one of Claims 4 to 6, **characterized in that** it comprises a stage of reduction in the pressure within the tank (8) via a withdrawal (15) of pressurized gas from the tank (8) to the outside, in particular into the atmosphere, and **in that**, on conclusion of this stage of reduction in the pressure, the pressure within the tank (8) remains greater than atmospheric pressure.

8. Filling method according to any one of Claims 1 to 7, **characterized in that** it comprises, prior to the first transfer stage (33), a stage of measurement or estimation of the initial pressure and optionally temperature conditions within the tank (8).

9. Filling method according to Claim 8 combined with any one of Claims 4 to 7, **characterized in that**, depending on the initial pressure and optionally temperature conditions within the tank (8) before the first transfer stage (33), the method comprises or does not comprise a stage of reduction in the pressure within the tank (8).

10. Filling method according to Claim 8 or 9 combined with any one of Claims 1 to 6, **characterized in that**, when the initial pressure within the tank (8) is between 1.05 and 12 bar absolute, in particular 3 bar absolute, the second transfer stage is carried out directly after the first transfer stage, that is to say without withdrawal of fluid from the tank (8) between these two transfer stages with a view to a reduction in the pressure in the tank (8).

11. Filling method according to any one of Claims 8 to 10 combined with any one of Claims 4 to 7, **characterized in that**, when the initial pressure within the tank (8) is between 4 and 8 bar abs, in particular equal to 6 bar abs, and when the initial temperature in the tank (8) is between 80 and 120 K, in particular equal to 100 K, the method comprises a stage of reduction in the pressure within the tank (8) between the two transfer stages.

12. Filling method according to any one of Claims 8 to 10 combined with any one of Claims 4 to 7, **characterized in that**, when the initial pressure within the tank (8) is between 8 and 12 bar abs, in particular equal to 10 bar absolute, and when the initial temperature in the tank (8) is between 20 and 120 K, in particular equal to 70 K or 100 K, the method comprises a stage of reduction in the pressure within the tank (8) between the two transfer stages.

13. Installation for the storage and distribution of liquefied hydrogen comprising a liquid hydrogen storage facility (4) at a specific storage pressure, at least one mobile tank (8) to be filled, a source (2) of gaseous hydrogen, a liquefier (3) comprising an inlet connected to the source (2) and an outlet connected to the liquid hydrogen storage facility (4), the storage facility (4) comprising a liquid withdrawal pipe (10) comprising an end connected to the liquid hydrogen storage facility (4) and at least one other end intended to be connected to the mobile tank(s) (8), the liquefier (3) being configured to produce and to feed the storage facility (4) with hydrogen at a temperature below the bubble point of hydrogen at the storage pressure, the installation comprising a boil-off gas recovery pipe (11) comprising an end intended to be connected to the tank(s) (8) and an end intended to be connected to the storage facility (4), in order to transfer this boil-off gas into the storage facility (4) for the purpose of its liquefaction, the installation additionally comprising a transfer pipe (13) having an end connected to the outlet of the liquefier (3) and an end intended to be connected directly to the tank(s) (8), the installation being configured to fill the at least one tank (8) by transferring a first amount of liquid hydrogen from the liquefier (3) into the tank (8) via the transfer pipe (13) and then a second amount of liquid hydrogen from the storage facility (4) to the tank (8) via the liquid withdrawal pipe (10), the installation being configured to optionally produce, between the transfers of the first and second amounts, a decrease in the pressure within the tank comprising at least one from: a withdrawal of pressurized gas from the tank (8) to the storage facility (4) via the recovery pipe (11), in particular by pressure balancing; a withdrawal of pressurized gas to the outside, in particular to the atmosphere, via a venting pipe (15) .

14. Installation according to Claim 13, **characterized in that** it comprises a set of sensor(s) (22) for measurement or estimation of the initial pressure and optionally temperature conditions within the tank (8) before filling and **in that** the installation is configured to produce or not produce, between the transfers of the first and second amounts, a decrease in the pressure within the tank (8) as a function of said initial pressure and optionally temperature conditions within the tank (8) .
